# EUROPÄISCHE PATENTSCHRIFT

(11) **EP 1 694 430 B1**
(45) Veröffentlichungstag und Bekanntmachung des Hinweises auf die Patenterteilung: **24.11.2010**
(21) Anmeldenummer: 04801221.5
(22) Anmeldetag: 10.12.2004
(51) Int. Cl.: B01J 8/02, C10G 49/00

(54) **VERFAHREN UND VORRICHTUNG ZUM EINDÜSEN VON SAUERSTOFF IN EINEN SYNTHESEREAKTOR**
METHOD AND DEVICE FOR INJECTION OF OXYGEN INTO A REFORMER REACTOR
PROCEDE ET DISPOSITIF D'INJECTION D'OXYGENE DANS UN REACTEUR DE SYNTHESE

(30) Priorität: 19.12.2003 DE 10359744
(43) Veröffentlichungstag der Anmeldung: 30.08.2006
(73) Patentinhaber: Uhde GmbH, 44141 Dortmund (DE)
(72) Erfinder: KOWOLL, Johannes, 44799 Bochum (DE); HEINRITZ-ADRIAN, Max, 48145 Münster (DE); SEMRAU, Lothar, 45128 Essen (DE)
(74) Vertreter: Meinke, Dabringhaus und Partner GbR
(86) Internationale Anmeldenummer: PCT/EP2004/014050
(87) Internationale Veröffentlichungsnummer: WO 2005/063373

(56) Entgegenhaltungen:
- EP-A- 0 473 870
- GB-A- 1 449 205
- GB-A- 1 449 205
- US-A- 2 361 623
- US-A- 2 632 692
- US-A- 2 632 692
- US-A- 4 741 885
- US-A1- 2002 098 136

## Beschreibung

Die Erfindung betrifft ein Verfahren und eine Vorrichtung zum Eindüsen von Sauerstoff in einen Synthesereaktor, beispielsweise zur Oxidehydrierung, mit im wesentlichen axialer Durchströmung des Gasgemisches durch ein Katalysatorbett.

Es gibt eine Reihe von katalytischen Verfahren, bei denen in einem Reaktor dem behandelnden Gas zusätzlich Sauerstoff zugeführt wird, etwa bei der sogenannten Oxidehydrierung von Propan oder Butan, wobei der Sauerstoff in den Oxidehydrierungsreaktoren dem einströmenden Gas vor dem Eintritt in den Katalysator beigemischt wird. Es hat sich gezeigt, daß insbesondere die unregelmäßige Durchmischung des in den Katalysator einströmenden Gases mit Sauerstoff zu unbefriedigenden Ergebnissen führt, sei es, daß es z.B. zu Rußbildung oberhalb des Katalysators kommt oder zur unzureichenden Wertstoffausbeute, etwa der Ausbeute an Propylen.

Hier setzt die Erfindung an, deren Aufgabe es ist, die Ein- und Durchmischung des Sauerstoffes oberhalb des Katalysators insbesondere für Oxidehydrierungsverfahren deutlich zu verbessern.

Mit einem Verfahren der eingangs bezeichnete Art wird diese Aufgabe gemäß der Erfindung dadurch gelöst, daß der Sauerstoff in Reinform, als Luft oder vermischt mit Inertgas oder Wasserdampf einem über dem Katalysatorbett angeordneten Ringverteilersystem mit einer Mehrzahl von mit Austrittsöffnungen versehenen, konzentrischen Ringrohren zugeführt wird und aus der Vielzahl von Austrittsöffnungen im Ringverteiler in einem von der Senkrechten abweichenden schrägen Winkel auf die Katalysatoroberfläche aufgedüst wird, wobei die Aufdüsung des Sauerstoffes in einer Ebene 50 - 300 mm oberhalb des Katalysatorbettes erfolgt, die eine Sauerstoffverweilzeit von ≤ 1 Sekunde im Raum oberhalb des Katalysatorbettes sicherstellt.

Es hat sich gezeigt, daß durch diese Verfahrensweise eine Durchmischung innerhalb sehr kurzer Zeit < 100 ms erreicht wird, so daß die Reaktionszeit in Zonen mit überstöchiometrischen Sauerstoffkonzentrationen und die nicht katalytischen Reaktionen minimiert werden. Da die Vermischung im freien Raum stattfindet und die sauerstoffreiche Mischung keinen Kontakt mit Wänden bzw. dem Katalysator hat, wird die Schädigung von Werkstoffen durch den eingedüsten Sauerstoff minimiert.

Ausgestaltungen der Erfindung ergeben sich aus den Unteransprüchen.

Je nach Konstruktion des Reaktors kann es zweckmäßig sein, die Aufdüsung des Sauerstoffes nur in Richtung der Reaktormitte oder nur in Richtung auf die Reaktorwand oder auch in tangentialer Richtung durchzuführen, wobei selbstverständlich eine weitere Variante darin besteht, diese Einströmrichtungen des Sauerstoffes sowohl in der einen wie auch in der anderen Richtung gleichzeitig ggf. in verschiedenen Axialebenen vorzusehen. Mit den unterschiedlichen Anströmwinkeln kann man sich etwa bei einem Nachrüsten bereits bestehender Anlagen der jeweiligen Reaktorbauweise anpassen.

Als besonders zweckmäßig hat sich eine Verfahrensweise herausgestellt, die darin besteht, daß die Aufdüsung des Sauerstoffes in tangentialer Ausrichtung und je Ring des Ringverteilers in von Ring zu Ring des Ringverteilers wechselnder Ausrichtung erfolgt.

Zur Lösung der gestellten Aufgabe sieht die Erfindung auch einen Synthesereaktor vor, der sich auszeichnet durch einen Ringverteiler aus mehreren konzentrischen, mit Austrittsöffnungen versehenen Ringrohren oberhalb des Katalysatorbettes, wobei die Austrittsöffnungen zur Aufdüsung des Sauerstoffes in einem von der Senkrechten abweichenden schrägen Winkel auf die Katalysatoroberfläche ausgebildet sind und der Ringverteiler in einer Ebene 50-300 mm oberhalb des Katalysatorbettes positioniert ist, die eine Sauerstoffverweilzeit von ≤ 1 Sekunde im Raum oberhalb des Katalysatorbettes sicherstellt.

Die Gasaustrittsöffnungen können als Bohrungen oder Düsen ausgebildet sein.

Zum Stand der Technik seien an dieser Stelle einige Literaturstellen erwähnt. So DE-OS 43 33 372, die ein Herstellungsverfahren von Olefinen aus Methan enthaltenen Gasmischungen offenbart, EP 0 473 870 A1 einen Reformer mit Oxidationsmittelzuführung, oder die US-5 935 489, die ein Verfahren und eine Vorrichtung zur Synthesegasherstellung mit partieller Oxidation zeigt oder die US-Patentschriften 2 518 583, 2 809 981 oder 2 954 281. Der US-2 584 391 ist die Aufdüsung eines Reaktanden in von der Senkrechten abweichenden Richtungen zu entnehmen, um einen effektiveren Kontakt zwischen festen und gasförmigen Partikeln in einem fluidisierten Bett eines Reaktors zu erreichen. Einrichtungen zum Verteilen von Fluiden oberhalb von oder zwischen Katalysatorbetten zeigen die US-262 692, US-3 208 833 oder die US-3 685 971. Einen spiralförmigen Verteiler zeigt die WO 01/76731-A1.

Konstruktive Ausgestaltungen der Erfindung ergeben sich aus den die Vorrichtung betreffenden Unteransprüchen.

Weitere Merkmale, Einzelheiten und Vorteile der Erfindung ergeben sich aufgrund der nachfolgenden Beschreibung sowie anhand der Zeichnung. Diese zeigt in
- Fig. 1: eine stark vereinfachte Darstellung einer Vor- richtung nach der Erfindung sowie in
- Fig. 2: eine Detailvergrößerung als Schnittzeichnung des Ringverteilersystems für den Sauerstoff- eintrag sowie in den
- Fig. 3 und 4: Prinzipskizzen der Aufströmrichtung von zwei Strahlen von Sauerstoffpartikeln auf das Katalysatorbett bei unterschiedlichen Auf- treffwinkeln.

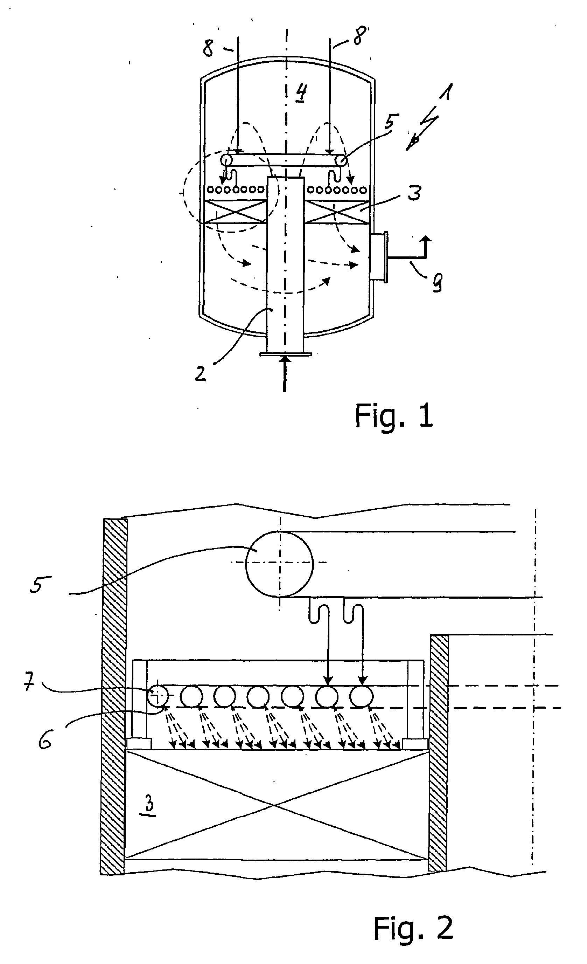

Der in Fig. 1 im Schnitt schematisch dargestellte, allgemein mit 1 bezeichnete Oxireaktor weist ein Gaseintrittsrohr 2 auf, das einen horizontal angeordneten Katalysator 3 zentrisch durchsetzt, wobei oberhalb des Katalysatorbettes im Reaktor ein Gasdom 4 ausgebildet ist.

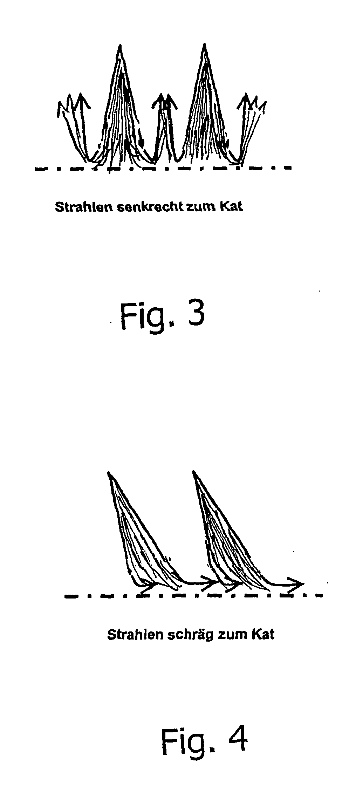

Das zentrische Gaseintrittsrohr 2 wird von einem Ringverteiler 5 für Sauerstoff in Reinform, als Luft oder vermischt mit Inertgas oder Wasserdampf umgeben, wobei dieses Ringrohr 5 eine Mehrzahl von mit Austrittsöffnungen 6 ausgestatteten Ringrohren 7 speist, die oberhalb des Katalysators 3 angeordnet sind. Die Austrittsöffnungen 6 sind so angeordnet, daß der jeweilige Sauerstoffstrahl in einem von der Senkrechten abweichenden Winkel auf die Katalysatoroberfläche auftrifft, wobei in Fig. 3 die senkrechte Auftreffsituation dargestellt ist und in Fig. 4 eine der erfindungsgemäßen Situationen.

In Fig. 1 ist der O₂-Eintritt in den Ringverteiler 5 lediglich durch Pfeile 8 angedeutet, auch der Gasaustritt des Reaktors ist nur angedeutet und trägt das Bezugszeichen 9.

Mit der auch in Fig. 4 angedeuteten schrägen Auftreffsrichtung des Sauerstoffstrahles auf das Katalysatorbett wird u.a. erreicht, daß eine großräumige Zirkulation des sauerstoffhaltigen Gases verhindert wird.

Wie in Fig. 3 angedeutet, treffen bei senkrechter Anströmung benachbarte Strahlen über dem Katalysator aufeinander, wodurch es zu einer zu vermeidenden Zirkulation kommen kann.

Natürlich ist das beschriebene Ausführungsbeispiel der Erfindung noch in vielfacher Hinsicht abzuändern, ohne den Grundgedanken zu verlassen, insbesondere können die Auftreffwinkel je nach Bauart des Reaktors auch in anderer Weise gewählt werden.

## Patentansprüche

1. Verfahren zum Eindüsen von Sauerstoff in einen Synthesereaktor, beispielsweise zur Oxidehydrierung, mit im wesentlichen axialer Durchströmung des Gasgemisches durch ein Katalysatorbett,
**dadurch gekennzeichnet,**
**daß** der Sauerstoff in Reinform, als Luft oder vermischt mit Inertgas oder Wasserdampf einem über dem Katalysatorbett (3) angeordneten Ringverteilersystem mit einer Mehrzahl von mit Austrittsöffnungen (6) versehenen, konzentrischen Ringrohren (7) zugeführt wird und aus der Vielzahl von Austrittsöffnungen (6) im Ringverteiler in einem von der Senkrechten abweichenden schrägen Winkel auf die Katalysatoroberfläche aufgedüst wird, wobei die Aufdüsung des Sauerstoffes in einer Ebene 50-300 mm oberhalb des Katalysatorbettes erfolgt, die eine Sauerstoffverweilzeit von ≤ 1 Sekunde im Raum oberhalb des Katalysatorbettes sicherstellt.

2. Verfahren nach Anspruch 1,
**dadurch gekennzeichnet,**
**daß** die Aufdüsung des Sauerstoffes in Richtung auf die Reaktormitte und/oder in Richtung auf die Reaktorwand und/oder in tangentialer Ausrichtung vorgenommen wird.

3. Verfahren nach Anspruch 1 oder 2,
**dadurch gekennzeichnet,**
**daß** die Aufdüsung des Sauerstoffes in tangentialer Ausrichtung und je Ring des Ringverteilers in von Ring zu Ring des Ringverteiler wechselnder Ausrichtung erfolgt.

4. Synthesereaktor, beispielsweise zur Oxidehydrierung, mit im wesentlichen axialer Durchströmung des Gasgemisches durch ein Katalysatorbett, mit einer Vorrichtung zum Eindüsen von Sauerstoff, insbesondere zur Durchführung des Verfahrens nach einem der vorangehenden Ansprüche, **gekennzeichnet durch**
einen Ringverteiler aus mehreren konzentrischen, mit Austrittsöffnungen (6) versehenen Ringrohren (7) oberhalb des Katalysatorbettes (3), wobei die Austrittsöffnungen (6) zur Aufdüsung des Sauerstoffes in einem von der Senkrechten abweichenden schrägen Winkel auf die Katalysatoroberfläche ausgebildet sind und der Ringverteiler in einer Ebene 50-300 mm oberhalb des Katalysatorbettes positioniert ist, die eine Sauerstoffverweilzeit von ≤ 1 Sekunde im Raum oberhalb des Katalysatorbettes sicherstellt.

5. Synthesereaktor nach Anspruch 4 mit einem zentralen Gaseintrittsrohr, das das Katalysatorbett zentrisch durchsetzt, und mit einem Mischdom oberhalb des Katalysatorbettes,
**gekennzeichnet durch**
einen das zentrische Gasführrohr (2) umgebenden Sauerstoffringverteiler (7).

6. Synthesereaktor nach Anspruch 4 oder 5,
**dadurch gekennzeichnet,**
**daß** der Ringverteiler aus einer Mehrzahl von koaxial positionierten Ringrohren (7) gebildet ist mit Gasaustrittsöffnungen (6), die eine Gasströmung in Richtung auf die Reaktormitte und/oder Reaktorwand und/oder in tangentialer Richtung gewährleisten.

7. Synthesereaktor nach Anspruch 4 oder einem der folgenden, **dadurch gekennzeichnet,**
**daß** benachbarte Gasaustrittsöffnungen (6) unterschiedliche Strömungsaustrittsrichtungen aufweisen.

8. Synthesereaktor nach Anspruch 4 oder einem der folgenden, **dadurch gekennzeichnet,**
**daß** die Gasaustrittsöffnungen (6) in wechselnder Folge zu benachbarten Austrittsöffnungen eines benachbarten Ringrohres ausgerichtet sind.

9. Synthesereaktor nach Anspruch 4 oder einem der folgenden, **dadurch gekennzeichnet,**
**daß** die Gasaustrittsöffnungen (6) als Bohrungen oder Düsen ausgebildet sind.

## Claims

1. A method of nozzle injection of oxygen into a synthesis reactor, for example for oxidative dehydrogenation, with a substantially axial flow of the gas mixture through a catalyst bed,
**characterised in that** the oxygen is fed in pure form, in the form of air or mixed with inert gas or vapour to a ring distributor system arranged over the catalyst bed (3) with a multiplicity of concentric ring pipes (7) provided with outlet openings (6) and is jetted out of the plurality of outlet openings (6) in the ring distributor on to the catalyst surface at an inclined angle differing from the perpendicular, wherein jetting of the oxygen on to the catalyst surface is effected in a plane 50 - 300 mm above the catalyst bed, which ensures an oxygen residence time of ≤ 1 second in the space above the catalyst bed.

2. A method according to claim 1 **characterised in that** jetting of the oxygen is effected in a direction towards the reactor centre and/or in a direction towards the reactor wall and/or in a tangential orientation.

3. A method according to claim 1 or claim 2 **characterised in that** jetting of the oxygen is effected in a tangential orientation and for each ring of the ring distributor in an orientation that changes from one ring to another of the ring distributor.

4. A synthesis reactor, for example for oxidative dehydrogenation, with a substantially axial flow of the gas mixture through a catalyst bed, with an apparatus for nozzle injection of oxygen, in particular for carrying out the method according to one of the preceding claims, **characterised by**
a ring distributor comprising a plurality of concentric ring pipes (7) provided with outlet openings (6) above the catalyst bed (3), wherein the outlet openings (6) are adapted to jet the oxygen on to the catalyst surface at an inclined angle differing from the perpendicular and the ring distributor is positioned in a plane 50 - 300 mm above the catalyst bed which ensures an oxygen residence time of ≤ 1 second in the space above the catalyst bed.

5. A synthesis reactor according to claim 4 comprising a central gas intake pipe which passes centrally through the catalyst bed, and a mixing dome above the catalyst bed, **characterised by** an oxygen ring distributor (7) surrounding the central gas feed pipe (2).

6. A synthesis reactor according to claim 4 or claim 5 **characterised in that** the ring distributor is formed from a plurality of coaxially positioned ring pipes (7) with gas outlet openings (6) which ensure a gas flow in a direction towards the reactor centre and/or the reactor wall and/or in a tangential direction.

7. A synthesis reactor according to claim 4 or one of the following claims **characterised in that** adjacent gas outlet openings (6) have different flow outlet directions.

8. A synthesis reactor according to claim 4 or one of the following claims **characterised in that** the gas outlet openings (6) are oriented in alternate succession relative to adjacent outlet openings of an adjacent ring pipe.

9. A synthesis reactor according to claim 4 or one of the following claims **characterised in that** the gas outlet openings (6) are in the form of bores or nozzles.

## Revendications

1. Procédé d'injection d'oxygène dans un réacteur de synthèse, par exemple pour l'oxydéshydrogénation avec écoulement essentiellement axial du mélange gazeux dans une couche catalytique, **caractérisé en ce que**
l'oxygène de forme pure est acheminé, sous forme d'air ou mélangé avec un gaz inerte ou de la vapeur d'eau à partir d'un système de répartition circulaire, ledit système étant disposé au-dessus de la couche catalytique (3) et doté de tubes circulaires (7) avec une pluralité d'ouvertures de sortie (6) concentriques, et est injecté à partir des multiples ouvertures de sortie (6) dans le répartiteur circulaire dans l'un des angles obliques divergents de la verticale sur la surface du catalyseur, l'injection d'oxygène étant effectuée sur un plan de 50 à 300 mm au-dessus de la couche catalytique qui assure un temps de séjour de l'oxygène inférieur ou égal à 1 seconde dans l'espace au-dessus de la couche catalytique.

2. Procédé selon la revendication 1,
**caractérisé en ce**
**que** l'injection de l'oxygène est entreprise dans la direction du milieu du réacteur et/ou dans la direction de la paroi du réacteur et/ou dans une direction tangentielle.

3. Procédé selon la revendication 1 ou 2,
**caractérisé en ce**
**que** l'injection de l'oxygène s'effectue dans la direction tangentielle et par anneau du répartiteur circulaire, en direction alternées d'un anneau à l'autre du répartiteur circulaire.

4. Réacteur de synthèse, par exemple, pour l'oxydéshydrogénation avec écoulement essentiellement axial du mélange gazeux dans une couche catalytique, comportant un dispositif d'injection d'oxygène, en particulier pour la réalisation du procédé selon l'une des revendications précédentes,
**caractérisé par**
un répartiteur circulaire constitué de plusieurs tubes circulaires concentriques (7) dotés d'ouvertures de sortie (6) au-dessus de la couche catalytique (3), les ouvertures de sortie (6) pour l'injection d'oxygène étant constituées dans l'un des angles obliques divergents de la verticale sur la surface du catalyseur, et le répartiteur circulaire étant placé sur un plan de 50 à 300 mm au-dessus de la couche catalytique qui assure un temps de séjour de l'oxygène inférieur ou égale à 1 seconde dans l'espace au-dessus de la couche catalytique.

5. Réacteur de synthèse selon la revendication 5, comportant un tube d'entrée de gaz central qui traverse la couche catalytique centralement et un dôme de mélange au-dessus de la couche catalytique,
**caractérisé par**
un répartiteur circulaire d'oxygène (7) entourant le tube d'acheminement de gaz central (2).

6. Réacteur de synthèse selon la revendication 4 ou 5,
**caractérisé en ce que**
le répartiteur circulaire est constitué d'une multiplicité de tubes circulaires (7) placés au niveau coaxial avec des ouvertures de sortie de gaz (6) qui assurent un écoulement de gaz dans la direction du milieu du réacteur et/ou de la paroi du réacteur et/ou dans une direction tangentielle.

7. Réacteur de synthèse selon la revendication 4 ou l'une des revendications suivantes, **caractérisé en ce**
**que** des ouvertures de sortie de gaz voisines (6) présentent des directions de sortie d'écoulement différentes.

8. Réacteur de synthèse selon la revendication 4 ou l'une des revendications suivantes, **caractérisé en ce**
**que** les ouvertures de sortie de gaz (6) sont orientées en série alternant par rapport aux ouvertures de sortie voisines d'un tube circulaire voisin.

9. Réacteur de synthèse selon la revendication 4 ou l'une des revendications suivantes, **caractérisé en ce**
**que** les ouvertures de sortie de gaz (6) sont constituées d'alésages ou de buses.
